# EUROPÄISCHE PATENTSCHRIFT

(11) **EP 3 710 788 B1**
(45) Veröffentlichungstag und Bekanntmachung des Hinweises auf die Patenterteilung: **29.09.2021**
(21) Anmeldenummer: 19700260.3
(22) Anmeldetag: 08.01.2019
(51) Int. Cl.: G01F 1/42, G01F 15/14, G01F 15/16, F16L 47/02, B23K 26/57, F16L 23/026, F16L 23/028, B23K 26/073

(54) **STRÖMUNGSROHR FÜR EINEN DURCHFLUSSSENSOR UND VERFAHREN ZUR HERSTELLUNG EINES STRÖMUNGSROHRS**
FLOW TUBE FOR A FLOW SENSOR AND METHOD FOR PRODUCING A FLOW TUBE
TUBE D'ÉCOULEMENT POUR CAPTEUR D'ÉCOULEMENT ET PROCÉDÉ DE FABRICATION D'UN TUBE D'ÉCOULEMENT

(30) Priorität: 09.01.2018 DE 102018000084
(43) Veröffentlichungstag der Anmeldung: 23.09.2020
(73) Patentinhaber: Drägerwerk AG & Co. KGaA, 23558 Lübeck (DE)
(72) Erfinder: OTTE, Tobias, 23562 Lübeck (DE); KASZÁS, Helena, 23627 Groß Grönau (DE); JACOBI, Ralph-Peter, 21465 Reinbek (DE); SCHÜTZE, Philipp, 23564 Lübeck (DE)
(86) Internationale Anmeldenummer: PCT/EP2019/050300
(87) Internationale Veröffentlichungsnummer: WO 2019/137893

(56) Entgegenhaltungen:
- DE-A1-102010 040 287
- Anonymous: "Plastic Welding with Diode Lasers", , 1. Juni 2005 (2005-06-01), XP055576303, Gefunden im Internet: URL:http://www.designforlasermanufacture.c om/assets/LaserLine_0506-Distributors-Plas ticWelding.pdf [gefunden am 2019-04-01]
- Steffen Reinl: "Radial Welding of Polymer Parts under Closed Loop Process Control", Laser Technik Journal, 1. Januar 2015 (2015-01-01), Seiten 46-50, XP055576295, DOI: 10.1002/latj.201500018 Gefunden im Internet: URL:http://www.dilas.com.cn/assets/media/m ediacoverage/DILAS_Radial_Welding_of_Polym er_Parts_LTJ-June2015.pdf [gefunden am 2019-04-01]

## Beschreibung

Die Erfindung betrifft ein Strömungsrohr, insbesondere ein Strömungsrohr, das als zentrale Komponente eines Durchflusssensors in Betracht kommt, einen Durchflusssensor mit einem solchen Strömungsrohr sowie ein Verfahren zur Herstellung eines Strömungsrohrs.

Durchflusssensoren (Flowsensoren) und davon umfasste Strömungsrohre sind grundsätzlich an sich bekannt, zum Beispiel aus der US 4,083,245, der DE 10 2010 040 287 A1 oder der EP 0 331 773 A1.

In der Medizintechnik werden Durchflusssensoren zum Beispiel bei der Steuerung und/oder Regelung von Beatmungsgeräten verwendet, um einen Patientendurchfluss zu messen und/oder zu kontrollieren. Bei einigen Anwendungen ist es von Vorteil, wenn die Durchflusssensoren direkt hinter einem sogenannten Patiententubus und -filter angebracht werden. Für diesen Fall müssen die Sensoren den Durchfluss in beide Richtungen (bidirektional) messen können, nämlich vom Beatmungsgerät zum Patienten und umgekehrt.

Bei bekannten Durchflusssensoren der eingangs genannten Art ist ein Strömungskörper als Widerstand in einem durch das Strömungsrohr definierten Strömungskanal angeordnet. Der Strömungskörper wird im Folgenden entsprechend der üblichen Terminologie als Blendenelement bezeichnet. Das Blendenelement verursacht bei einer Durchströmung des Strömungsrohrs einen Druckabfall. Dieser Druckabfall über das Blendenelement wird gemessen und der gemessene Druckabfall ist ein Maß für den jeweiligen Durchfluss durch das Strömungsrohr.

Normative Anforderungen bestimmen, dass der Ausatemwiderstand und der Einatemwiderstand für den Patienten (im Folgenden als Resistance bezeichnet) je nach Anwendung einen bestimmten Wert nicht überschreiten dürfen. Aus diesem Grunde muss das Blendenelement so ausgelegt sein, dass ein spezifischer Differenzdruck bei einem bestimmten Durchfluss nicht überschritten wird. Als weitere Randbedingung ist der eigentliche Differenzdrucksensor zu berücksichtigen. Dieser hat einen spezifischen Messbereich in inspiratorischer und exspiratorischer Richtung, sodass das Blendenelement so ausgelegt sein muss, dass der maximal messbare Differenzdruck bei dem maximal zu messenden Durchfluss nicht überschritten wird. Meist wird zur Messwertverarbeitung der Differenzdruck mittels eines A/D-Wandlers digitalisiert und mittels einer im Beatmungsgerät hinterlegten Lookup-Tabelle in einen Durchflussmesswert umgewandelt.. Da zur Steuerung eines Beatmungsgeräts, speziell bei niedrigen Durchflüssen, eine gute Ermittlung der Durchflusses notwendig ist, muss das Blendenelement entsprechend so ausgelegt sein, dass eine hinreichende Steigung im sensorcharakteristischen Verhalten (Kennlinie) zwischen Durchfluss und Differenzdruck (Flow-dp) vorhanden ist.

Bei einer kreisförmigen Blende als Widerstand resultiert eine nichtlineare Kennlinie. Dies macht das Erreichen sowohl einer höheren Auflösung im Niedrigflussbereich wie auch die Erfüllung der normativen Anforderungen hinsichtlich der Resistance sehr schwierig. Vorteilhafter und Stand der Technik ist es, Sensoren mit einer linearen Kennlinie zu realisieren, welche häufig aus einer variablen Öffnung zwischen zwei Hälften eines Gehäuses des Sensors sowie einem Gehäuse mit einer speziellen Innengeometrie bestehen, welche ein gewünschte Strömungstopologie hervorruft. Die variable Öffnung wird mittels einer als Blendenelement fungierenden Klappe realisiert. Die Klappe öffnet sich mit größer werdendem Durchfluss entsprechend stärker, sodass der Druckabfall proportional sinkt. Vor und hinter der Klappe sind in ausreichendem Abstand (abhängig von der Strömungstopologie) Druckmessstellen angeordnet, um einen möglichst stationär statischen Druck messen zu können.

Die Klappe des Sensors ist meist aus Stahl oder Kunststoff, zum Beispiel Mylar (EP 0 331 773 A1), und die Gehäuse je nach Anwendungsfall (Einweg oder aufbereitbar) aus einem geeigneten Kunststoff gefertigt. Der Druckabfall über das Blendenelement und der resultierende Differenzdruck werden maßgeblich durch die Größe der Durchtrittsöffnung bei der jeweiligen Durchflussmenge bestimmt. Die Größe der Durchtrittsöffnung wird wiederum durch das Öffnungsverhalten der Klappe sowie die Größe der Klappe an sich bestimmt. Das Öffnungsverhalten der Klappe wird maßgeblich von der durch das anströmende Gas auf die Klappe ausgeübte Kraft, die Materialeigenschaften der Klappe, die Klappenkontur und die Lagerung der Klappe bestimmt. Die auf die Klappe wirkende Kraft hängt unter anderem von den Anströmeigenschaften des Gases ab, welche wiederum unter anderem von der Innengeometrie der Gehäusehälften, aber auch von der Dichte des jeweiligen Gases abhängen.

Bei einem bidirektionalen Sensor ist es vorteilhaft, wenn die Kennlinie in beiden Richtungen identisch ist. In der EP 0 331 773 A1 ist eine praktikable Auslegung eines solchen Sensors beschrieben und unter anderem erwähnt, dass eine spannungsfreie Lagerung der Klappe in dem jeweiligen Gehäuse vorausgesetzt wird.

Die gesamten Einflussgrößen zusammengenommen ergeben die Bauteiltoleranz des Sensors (Serienstreuung) und bestimmen eine resultierende sensorspezifische Messgenauigkeit. Eine hohe Messgenauigkeit ist stets wünschenswert und zum Beispiel dann besonders vorteilhaft, wenn durch den Anwender vor der Benutzung keine Kalibrierung durchgeführt werden kann (zum Beispiel in Notfallsituationen im Rettungsdienst).

Die serienbedingte Streuung der Kennlinie und damit die Messgenauigkeit des Flowsensors wird in großem Maße durch die Reproduzierbarkeit des Öffnungsverhaltens der jeweiligen Klappe (Klappenöffnungscharakteristik) beeinflusst. Diese ist - wie oben erläutert - unter anderem von der Lagerung der Klappe zwischen den Gehäusehälften des Sensors abhängig. Je reproduzierbarer die Lagerung ausgeführt werden kann, desto reproduzierbarer ist auch das Öffnungsverhalten der Klappe. In der EP 0 331 773 A1 ist die Lagerung der Klappe auf Pins, die in einer Gehäusehälfte angebracht sind, beschrieben. Wird nun die zweite Gehäusehälfte gefügt, wird je nach Ausprägung der Spaltgeometrie in den Gehäusehälften die Klappe entweder geklemmt oder liegt lose in einem Lagerungsspalt. Die Klemmkraft hängt von den Dickentoleranzen des Klappenmaterials und der Breite des Lagerungsspalts ab. Die Breite des Lagerungsspalts hängt von den Fertigungstoleranzen des Fügeverfahrens sowie den Toleranzen der Gehäusehälften ab.

Bei der Verklemmung der Klappe werden Spannungen in das Klappenmaterial eingebracht, welche das Öffnungsverhalten beeinflussen. Wie stark sich Spannungen im Material durch die Klemmung ausbilden, ist in erster Linie durch die mechanische Stabilität des Klappenmaterials und die Form der Gehäusehälften, mit denen das Klappenmaterial geklemmt wird, bestimmt. Klappen aus einem steiferen Material lassen sich aus diesem Grund besser klemmen.

Bei einer losen Lagerung wird das Öffnungsverhalten der Klappe durch die Klappenmaterialdicke im Verhältnis zur Geometrie des Lagerungsspalts (Lagerungsspaltgeometrie) bestimmt. In dem Lagerungsspalt kann sich das Klappenmaterial in Abhängigkeit vom Grad der Öffnung der Klappe bewegen. Wenn die Klappe angeströmt wird, wird es an eine stromabwärtige (stromabwärts befindliche) Lagerungsfläche des Lagerungsspalts und der Gehäusehälfte stromabwärts gedrückt. Durch die Öffnung der Klappe verbiegt sich das Material im Lagerungsspalt in Richtung auf die andere Gehäusehälfte, zum Beispiel in Abhängigkeit von der Art der Lagerung, bis es an der stromaufwärtigen (stromaufwärts befindlichen) Lagerungsfläche des Lagerungsspalts und der Gehäusehälfte stromaufwärts anliegt. Die Klappe liegt dann an der Gehäusehälfte stromabwärts nur noch auf der Innenkante des Lagerungsspalts an. Diese bei einer losen Lagerung mögliche Relativbewegung im Lagerungsspalt bedeutet, dass die Klappe sich weiter öffnen kann als im eingespannten Zustand. Verändert sich nun der Lagerungsspalt, zum Beispiel chargenabhängig, erhält man Sensoren mit unterschiedlichen charakteristischen Kennlinienverläufen.

Im Stand der Technik ist weiterhin bekannt, die beiden Kunststoff-Gehäusehälften zum Beispiel durch Ultraschallschweißen zu fügen (DE 10 2010 040 287 A1). Das Ultraschallschweißen hat allerdings den Nachteil, dass zum Fügen ein Weg mit einer der beiden Gehäusehälften verfahren werden muss, um dessen Energierichter zu plastifizieren und mit der anderen, fixierten Gehäusehälfte zu verschweißen. Folglich ist hier der resultierende Lagerungsspalt abhängig von den Toleranzen der Kunststoffbauteile und zudem von der Fahrwegsgenauigkeit sowie der Prozesskontrolle des Energieeintrags beim Ultraschallschweißen. Zudem werden mit diesem Verfahren unvermeidbar Schwingungen in das Klappenmaterial eingebracht, was zur Schädigung des Materials des Blendenelements führen kann. Insbesondere wenn die Klappe gezielt geklemmt werden soll, ist das Ultraschallschweißverfahren durch die oben genannten Punkte eher ungünstig, weil dadurch die Klemmkraft nicht ausreichend reproduzierbar eingestellt werden kann.

Eine Aufgabe der vorliegenden Erfindung besteht darin, ein Strömungsrohr, insbesondere ein Strömungsrohr für einen Durchfluss-/Flowsensor, anzugeben, welches eine reproduzierbare Lagerung eines Blendenelements zwischen zwei Gehäusehälften des Strömungsrohrs gewährleistet. Eine weitere Aufgabe besteht darin, ein Verfahren zur Herstellung eines solchen Strömungsrohrs anzugeben.

Bezüglich des Strömungsrohrs wird diese Aufgabe erfindungsgemäß mittels eines Strömungsrohrs mit den Merkmalen des Anspruchs 1 gelöst. Das Strömungsrohr umfasst eine erste Gehäusehälfte und eine zweite Gehäusehälfte. Die beiden Gehäusehälften bilden zusammen ein Gehäuse. Das Gehäuse fungiert als Strömungsrohr. Jede Gehäusehälfte weist eine zur Kombination mit der jeweils anderen Gehäusehälfte bestimmte Anschlussfläche auf. Die Anschlussflächen der beiden Gehäusehälften schließen im miteinander kombinierten (zusammengefügten) Zustand einen Lagerungsspalt ein. Der Lagerungsspalt ist zur Aufnahme eines Blendenelements vorgesehen, nämlich eines Blendenelements, das in einem durch das Gehäuse definierten Strömungskanal als Strömungskörper fungiert. Die Anschlussflächen der beiden miteinander kombinierten Gehäusehälften liegen außerhalb des Lagerungsspalts mit jeweils einem Stoßflächenabschnitt abschnittsweise auf Stoß aneinander. Bei dem hier vorgeschlagenen Strömungsrohr ist darüber hinaus vorgesehen, dass die Gehäusehälften außerhalb des Lagerungsspalts und außerhalb der Stoßflächenabschnitte in einem Stoffschlussbereich stoffschlüssig miteinander kombinierbar sind und bei einem betriebsbereiten Strömungsrohr außerhalb des Lagerungsspalts und außerhalb der Stoßflächenabschnitte in dem Stoffschlussbereich stoffschlüssig miteinander kombiniert sind. Das stoffschlüssige Kombinieren erfolgt durch Laserschweißen und die beiden Gehäusehälften sind in dem Stoffschlussbereich durch Laserschweißen stoffschlüssig miteinander kombinierbar. Dafür sind die beiden Gehäusehälften aus einem zum Laserschweißen geeigneten Werkstoff gefertigt, insbesondere einem zum Laserschweißen geeigneten Kunststoff. Eine der beiden Gehäusehälften ist lasertransparent oder zumindest im Stoffschlussbereich lasertransparent und dafür aus einem entsprechenden Werkstoff gefertigt, insbesondere ganz oder teilweise aus einem lasertransparenten Kunststoff. Die andere Gehäusehälfte ist aus einem die Energie des Laserstrahls absorbierenden Werkstoff gefertigt, insbesondere im Bereich des Stoffschlussbereichs aus einem solchen Werkstoff gefertigt. Bei dem die Energie des Laserstrahls absorbierenden Werkstoff handelt es sich optional ebenfalls um einen Kunststoff, insbesondere einen Kunststoff mit darin eingebrachten, die Absorption der Energie des Laserstrahls bewirkenden Partikeln, zum Beispiel Rußpartikel.

Vorzugsweise sind beide Gehäusehälften durchsichtig. Durchsichtig bedeutet dabei, dass ein Betrachter durch das jeweilige Gehäuseteil oder durch beide Gehäuseteile zusammen hindurchsehen kann und auf diese Weise zum Beispiel bei einem in einem Medizingerät, insbesondere einem Beatmungsgerät, in Betrieb befindlichen Strömungsrohr kontrollieren kann, ob sich Fremdkörper in dem Strömungskanal befinden und/oder die Beweglichkeit des Blendenelements behindern. Bei solchen in diesem Sinne durchsichtigen Gehäuseteilen ist dennoch nur eines der Gehäuseteile lasertransparent, während das andere Gehäuseteil die Energie des Laserstrahls absorbiert. Ein mögliches Material für das durchsichtige und lasertransparente Gehäuseteil ist MABS oder PMMA. Das durchsichtige und die Energie des Laserstrahls absorbierende Gehäuseteil ist zum Beispiel aus demselben Material gefertigt, wobei in das Material des absorbierenden Gehäuseteils ein Absorber eingebracht ist.

Bei einem Strömungsrohr mit einer Abstellung, insbesondere einer Abstellung in Form einer Ringfeder, und einer Ausnehmung, insbesondere einer Ausnehmung in einer zur Aufnahme der Ringfeder bestimmten Ringnut, in den Anschlussflächen der beiden Gehäusehälften ist eine der beiden Gehäusehälften lasertransparent oder zumindest im Bereich der Abstellung bzw. Ausnehmung lasertransparent. Die Lasertransparenz bewirkt, dass der beim Laserschweißen auf die Gehäusehälften gerichtete Laserstrahl die lasertransparente Gehäusehälfte (oder dessen lasertransparenten Abschnitt) durchdringt und die andere Gehäusehälfte die Energie des Laserstrahls absorbiert. Die Absorption des Laserstrahls führt in grundsätzlich an sich bekannter Art und Weise zu einer lokalen Plastifizierung des Materials der jeweiligen Gehäusehälfte und bewirkt schließlich die stoffschlüssige Verbindung. Aufgrund der Lasertransparenz eines Gehäuseteils oder einer lokalen Lasertransparenz eines Gehäuseteils kann die stoffschlüssige Verbindung an einer Stelle erfolgen, die innerhalb des Volumens der zusammengefügten Gehäusehälften liegt.

Die beiden Gehäusehälften können auch beide lasertransparent ausgeführt sein, dann muss jedoch der Laserstrahl sehr genau auf die zu verschweißende Stelle fokussiert werden, damit der Bereich plastifiziert wird und es zu einem formschlüssigen Verbund kommt. Nachteilig ist hier die im Vergleich zum Verfahren mit Laserenergieabsorber größere benötigte Wärmeinflusszone.

Ein Verfahren zur Herstellung eines Strömungssensors der hier und im folgenden beschriebenen Art zeichnet sich dadurch aus, dass das Verfahren zumindest die folgenden Schritte umfasst: In einem ersten Schritt oder einem ersten Verfahrensabschnitt werden die beiden Gehäusehälften zusammengefügt und zwar derart, dass einerseits das Blendenelement in dem Lagerungsspalt von den beiden Gehäusehälften eingeschlossen ist und andererseits die beiden Gehäusehälften außerhalb des Lagerungsspalts im Bereich der Stoßflächenabschnitte auf Stoß aneinanderliegen. In einem zweiten Schritt oder einem zweiten Verfahrensabschnitt erfolgt das stoffschlüssige Kombinieren der Gehäusehälften außerhalb des Lagerungsspalts und außerhalb der Stoßflächenabschnitte, nämlich ein stoffschlüssiges Kombinieren der Gehäusehälften durch Laserschweißen.

Der Vorteil dieser Lösung besteht darin, dass mittels der auf Stoß aneinanderliegenden Stoßflächen eine definierte Breite des Lagerungsspalts gewährleistet ist. Der Lagerungsspalt kann gezielt zum Beispiel auf eine Dicke, eine Steifigkeit und/oder andere charakteristische Eigenschaften des Klappenmaterials ausgelegt werden.

Das Fügeverfahren Laserschweißen ist ein an sich bekanntes und gut beherrschtes Fügeverfahren. Im Gegensatz zum Beispiel zum Ultraschallschweißen werden keine Schwingungen in das Material des Blendenelements oder das Material der Gehäusehälften eingebracht und somit nachteilige Materialschädigungen vermieden.

Indem die beiden Gehäusehälften außerhalb des Lagerungsspalts und außerhalb der Stoßflächenabschnitte durch Laserschweißen stoffschlüssig miteinander kombiniert sind und bei einem Verfahren zur Herstellung eines solchen Strömungsrohrs außerhalb der Stoßflächenabschnitte stoffschlüssig durch Laserschweißen miteinander kombiniert werden, ist sichergestellt, dass sich beim Herstellen der stoffschlüssigen Verbindung die definierte Breite des Lagerungsspalts nicht verändert. Die definierte Breite des Lagerungsspalts gewährleistet - wie oben beschrieben - eine definierte Klemmung oder Lagerung des Blendenelements und damit ein definiertes und reproduzierbares Öffnungsverhalten des Blendenelements. Dieses wiederum gewährleistet einen reproduzierbaren Kennlinienverlauf und damit bei einer Verwendung des Strömungsrohrs als Basis für einen Durchflusssensor, dessen Messwerte anhand einer auf der Kennlinie basierenden Lookup-Tabelle generiert werden, exaktere Messwerte ohne spezielle Kalibrierung eines jeden einzelnen Durchflusssensors.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin und sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche sowie der Beschreibung bei einer näheren Konkretisierung eines Merkmals in einem nachgeordneten Anspruch davon auszugehen, dass eine derartige Beschränkung in den jeweils vorangehenden Ansprüchen sowie einer allgemeineren Ausführungsform des gegenständlichen Strömungsrohrs nicht vorhanden ist. Jede Bezugnahme in der Beschreibung auf Aspekte nachgeordneter Ansprüche ist demnach auch ohne speziellen Hinweis ausdrücklich als Beschreibung optionaler Merkmale zu lesen. Schließlich ist darauf hinzuweisen, dass das Strömungsrohr auch entsprechend der abhängigen Verfahrensansprüche weitergebildet sein kann, zum Beispiel derart, dass das Strömungsrohr Merkmale aufweist, welche sich aufgrund der Herstellung ergeben, und das Herstellungsverfahren auch entsprechend der abhängigen Vorrichtungsansprüche weitergebildet sein kann, zum Beispiel derart, dass das Herstellungsverfahren Verfahrensschritte umfasst, die bei der Herstellung des Strömungsrohrs zu einem oder mehreren jeweiligen Merkmalen des Strömungsrohrs führen, so dass bezüglich der Offenbarung zu den einzelnen Aspekten der Erfindung (Vorrichtung, Verfahren) stets wechselseitig Bezug genommen wird bzw. werden kann.

Bei einer Ausführungsform des Strömungsrohrs weist eine der Gehäusehälften in ihrer Anschlussfläche zumindest eine Abstellung und die andere Gehäusehälfte in ihrer Anschlussfläche zumindest eine zur Aufnahme der Abstellung bestimmte Ausnehmung auf. Die stoffschlüssige Verbindung der Gehäusehälften erfolgt in einem Kontaktbereich der Abstellung und der Ausnehmung und die Gehäusehälften sind mittels der Abstellung und der Ausnehmung durch Laserschweißen stoffschlüssig miteinander kombinierbar und bei einem betriebsbereiten Strömungsrohr mittels der Abstellung und der Ausnehmung durch Laserschweißen stoffschlüssig miteinander kombiniert. Ein Kontaktbereich oder eine Kontaktfläche einer solchen, sich auf der Anschlussfläche einer der Gehäusehälften erhebenden Abstellung und einer zur Aufnahme der Abstellung bestimmten Ausnehmung in der Anschlussfläche der anderen Gehäusehälfte fungiert als Stoffschlussbereich. Der Ort des Stoffschlussbereichs gewährleistet einen ausreichenden räumlichen Abstand des Orts der Herstellung der stoffschlüssigen Verbindung, nämlich einen ausreichenden räumlichen Abstand des Bereichs der beim Laserschweißen resultierenden lokalen Temperaturerhöhung im Material der Gehäusehälften, vom Lagerungsspalt und von den Stoßflächenabschnitten. Ein solcher räumlicher Abstand gewährleistet, dass sich die definierte Breite des Lagerungsspalts beim Laserschweißen und beim damit bewirkten Herstellen der stoffschlüssigen Verbindung nicht verändert.

Bei einer weiteren Ausführungsform des Strömungsrohrs sind der Lagerungsspalt, die Stoßflächenabschnitte sowie die Abstellung und die Ausnehmung auf den Anschlussflächen in radialer Richtung so angeordnet, dass der Lagerungsspalt relativ zu den Stoßflächenabschnitten vor den Stoßflächenabschnitten (also weiter "innen") liegt sowie die Abstellung und die Ausnehmung relativ zu den Stoßflächenabschnitten hinter den Stoßflächenabschnitten (also weiter "außen") liegen. Diese Abfolge - Lagerungsspalt: innen; Stoßflächenabschnitte: Mitte; Abstellung und Ausnehmung: außen - gewährleistet einen möglichst großen Abstand der Abstellung und der Ausnehmung vom Lagerungsspalt und damit einen möglichst großen Abstand vom Ort der Herstellung der stoffschlüssigen Verbindung der Gehäusehälften vom Lagerungsspalt. Ein solcher räumlicher Abstand gewährleistet in besonderem Maße, dass sich die definierte Breite des Lagerungsspalts beim Herstellen der stoffschlüssigen Verbindung nicht verändert.

Bei einer nochmals weiteren Ausführungsform des Strömungsrohrs sind die Abstellung und die Ausnehmung im Bereich einer radial am weitesten außen liegenden gemeinsamen Kontaktfläche stoffschlüssig miteinander verbunden. Diese Verbindungsstelle gewährleistet einen noch größeren räumlichen Abstand zwischen dem Ort der Herstellung der stoffschlüssigen Verbindung der Gehäusehälften und dem Lagerungsspalt.

Bei einer vorteilhaften Ausführungsform des Strömungsrohrs weist eine der Gehäusehälften eine radial umlaufende Ausnehmung (Ringnut) und die andere Gehäusehälfte eine in die radial umlaufende Ausnehmung einführbare radial umlaufende Abstellung (Ringfeder) auf. Eine solche Paarung von Ringnut und Ringfeder gewährleistet eine sehr exakte Fixierung der beiden Gehäusehälften zueinander. Eine stoffschlüssige Verbindung der Ringnut und der Ringfeder bewirkt eine radial umlaufende stoffschlüssige Verbindung und eine Gasdichtigkeit der Verbindung. Die Verbindung der beiden Gehäusehälften zur Fixierung des Blendenelements bewirkt damit gleichzeitig eine Verbindung der Gehäusehälften zu einem gasdichten Strömungsrohr.

Bei einer bevorzugten Ausführungsform des Strömungsrohrs sind die beiden Gehäusehälften im Bereich einer radial am weitesten außen liegenden gemeinsamen Kontaktfläche von Ringnut und Ringfeder durch Laserschweißen stoffschlüssig verbunden. Durch das Laserschweißen im Bereich einer solchen radial am weitesten außen liegenden und als Stoffschlussbereich fungierenden Kontaktfläche ist der Ort der beim Laserschweißen resultierenden lokalen Temperaturerhöhung im Material der Gehäusehälften in radialer Richtung besonders weit vom Lagerungsspalt entfernt und das Material der Ringfeder liegt in radialer Richtung noch zwischen dem Lagerungsspalt und dem Stoffschlussbereich, so dass mit nochmals erhöhter Sicherheit gewährleistet ist, dass sich die definierte Breite des Lagerungsspalts beim Laserschweißen und beim damit bewirkten Herstellen der stoffschlüssigen Verbindung nicht verändert.

Bei einer weiteren Ausführungsform des zum stoffschlüssigen Verbinden mittels des Fügeverfahrens Laserschweißen bestimmten Strömungsrohrs sind die beiden Gehäusehälften mittels eines auf einen Kreis aufgeweiteten und gleichzeitig entlang der kompletten Umfangslinie der Gehäusehälften des Strömungsrohrs wirksamen Laserstrahls stoffschlüssig verbunden. Bei einem Verfahren zur Herstellung eines solchen Strömungsrohrs wird der zum Laserschweißen bestimmte Laserstrahl mittels einer Optik in einen Kegelmantel aufgeweitet und der im Folgenden kurz als Strahlenbüschel bezeichnete, resultierende, aufgeweitete Laserstrahl wird mittels einer weiteren Optik, insbesondere mittels eines Ringspiegels, in Richtung auf die lose zusammengefügten Gehäusehälften umgelenkt, wobei bei Gehäusehälften mit einer radial umlaufenden Abstellung und einer zur Aufnahme der Abstellung bestimmten Ausnehmung dort die Abstellung gleichzeitig entlang der kompletten Umfangslinie mit der Ausnehmung stoffschlüssig verbunden wird. Bei einem Ringspiegel werden mittels des Ringspiegels mit einer gegen eine Ebene des Ringspiegels geneigten Oberfläche die Strahlen des Strahlenbüschels in Richtung auf eine Umfangslinie eines im Zentrum des Ringspiegels platzierten Strömungsrohrgehäuses und dessen Gehäusehälften umgelenkt. Die gleichzeitige Verbindung entlang der kompletten Umfangslinie der Gehäusehälften, insbesondere der Umfangslinie der umlaufenden Abstellung und der umlaufenden Ausnehmung, also beispielsweise der Ringfeder und der Ringnut, gewährleistet eine gleichartige Erhitzung entlang dieser Umfangslinie und vermeidet damit ansonsten mögliche mechanische Spannungen in den Gehäusehälften selbst und zwischen den Gehäusehälften.

Bei einer Ausführungsform des erfindungsgemäßen Verfahrens umfasst bei einem Strömungsrohr, dessen Gehäusehälften eine Abstellung und eine Ausnehmung zur Aufnahme der Abstellung aufweisen, der Verfahrensschritt des Zusammenfügens der beiden Gehäusehälften den Teilschritt des Einführens der Abstellung in die Ausnehmung. Entsprechend erfolgt das Zusammenfügen der beiden Gehäusehälften derart, dass das Blendenelement in dem Lagerungsspalt von den beiden Gehäusehälften eingeschlossen ist, die beiden Gehäusehälften außerhalb des Lagerungsspalts im Bereich der Stoßflächenabschnitte auf Stoß aneinanderliegen und die Abstellung in die Ausnehmung eingreift. Bei einem solchen Verfahren ist bevorzugt, aber grundsätzlich optional vorgesehen, dass die beiden Gehäusehälften durch stoffschlüssiges Verbinden der in die Ausnehmung eingreifenden Abstellung in der Ausnehmung miteinander kombiniert werden.

Zum stoffschlüssigen Verbinden der beiden Gehäusehälften oder Teile der Gehäusehälften, insbesondere der Abstellung und der Ausnehmung, zum Beispiel eine Abstellung in Form einer Ringfeder und einer Ausnehmung in Form einer Ringnut, ist das Fügeverfahren des Laserschweißens vorgesehen. Bei einer speziellen Ausführungsform des Verfahrens zum Herstellen eines Strömungsrohrs der hier und im folgenden beschriebenen Art ist vorgesehen, dass die zusammengefügten Gehäusehälften in axialer Richtung auf eine Quelle des Laserstrahls ausgerichtet fixiert werden, zumindest aber in axialer Richtung kollinear mit einer Mittellängsachse eines aufgrund der Aufweitung des Laserstrahls resultierenden Strahlenbüschels ausgerichtet fixiert werden, dass die von der Quelle des Laserstrahls abgewandte (oder die in Richtung des Strahlengangs abgewandte) Gehäusehälfte in axialer Richtung fixiert wird, zum Beispiel indem diese eingespannt oder auf einen abschnittsweise in das Innere der Gehäusehälfte ragenden Zapfen aufgesteckt wird, und die der Quelle des Laserstrahls zugewandte (oder die dem Strahlengang zugewandte) Gehäusehälfte mittels einer lasertransparenten Platte, insbesondere einer Glasplatte, auf der anderen Gehäusehälfte fixiert wird. Die axiale Fixierung der von der Quelle des Laserstrahls abgewandten Gehäusehälften gewährleistet allgemein eine Position der beiden zu verbindenden Gehäusehälften an einer definierten Position im Strahlengang. Die Fixierung der dem Strahlengang zugewandten Gehäusehälfte auf der anderen Gehäusehälfte mittels der lasertransparenten Platte gewährleistet eine gewünschte Relativposition der beiden Gehäusehälften sowie eine sichere Halterung der beiden Gehäusehälften relativ zueinander. Die Fixierung mittels der lasertransparenten Platte gewährleistet, dass der Laserstrahl nicht unterbrochen wird. Eine solche lasertransparente Platte, insbesondere eine Glasplatte, hat also eine Doppelfunktion. Zum einen lässt sie den Laserstrahl passieren. Zum anderen hält sie die ansonsten lose Gehäusehälfte auf der fixierten, zum Beispiel eingespannten Gehäusehälfte. Die Glasplatte oder eine Platte aus einem sonstigen lasertransparenten Material ist dabei so angeordnet, dass eine Ebene der (Glas-)Platte senkrecht auf einer Mittellängsachse des zu einem Strahlenbüschel aufgeweiteten Laserstrahls steht. Diese Orientierung bewirkt gleiche Brechungsverhältnisse für den kreisförmig auf die (Glas-)Platte auftreffenden Laserstrahl.

Das hier und im Folgenden beschriebene Strömungsrohr kommt speziell als zentrale Komponente eines Durchflusssensors in Betracht. Damit ist die hier vorgeschlagene Neuerung auch ein Durchflusssensor mit einem Strömungsrohr der hier und im Folgenden beschriebenen Art. Das Strömungsrohr und der Durchflusssensor kommen speziell zur Verwendung in einem Medizingerät, zum Beispiel einem Beatmungsgerät, in Betracht. Entsprechend ist die hier vorgeschlagene Neuerung auch ein Medizingerät, insbesondere ein Beatmungsgerät, mit einem Strömungsrohr oder einem Durchflusssensor wie hier und im Folgenden beschrieben.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen für den Fachmann im Hinblick auf die Lösung der Aufgabe entnehmbar sind und durch kombinierbare Merkmale zu einem neuen Gegenstand oder zu einem neuen Herstellungsverfahren führen.

Es zeigen:
- Figur 1: ein Strömungsrohr mit zwei ein Gehäuse des Strömungsrohrs bildenden Gehäusehälften und einem Blendenelement zwischen den Gehäusehälften,
- Figur 2: einen Schnitt durch die Gehäusehälften und
- Figur 3: eine Anordnung zur Herstellung eines Strömungsrohrs gemäß Figur 1 und Figur 2.

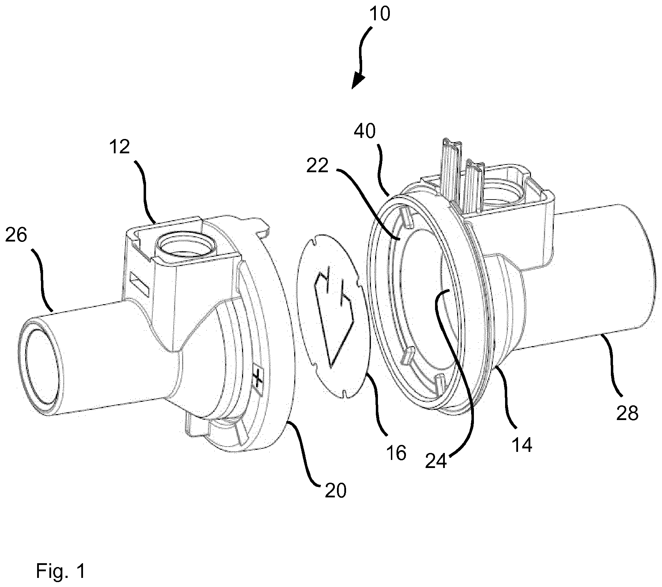

Die Darstellung in Figur 1 zeigt schematisch vereinfacht ein Strömungsrohr 10 und einen mit dem Strömungsrohr 10 als zentrale Komponente gebildeten Durchflusssensor. Das Strömungsrohr 10 umfasst in grundsätzlich an sich bekannter Art und Weise zwei Gehäusehälften 12, 14, nämlich eine erste Gehäusehälfte 12 und eine zweite Gehäusehälfte 14, sowie ein zwischen den beiden Gehäusehälften 12, 14 eingeschlossenes Blendenelement 16. Jede Gehäusehälfte 12, 14 weist einen Flanschbereich und als Oberfläche des Flanschbereichs eine Anschlussfläche 20, 22 auf. Die Anschlussflächen 20, 22 der beiden Gehäusehälften 12, 14 sind einander zugewandt und das Blendenelement 16 ist zwischen den beiden Anschlussflächen 20, 22 eingeschlossen. Die beiden Gehäusehälften 12, 14 bilden zusammen ein Gehäuse 12, 14 des Strömungsrohrs 10 und definieren einen Strömungskanal 24. Das Strömungsrohr 10 ist in grundsätzlich an sich bekannter Art Teil einer Rohrleitung 26, 28, insbesondere einer als Gasleitung fungierenden Rohrleitung 26, 28, zum Beispiel einer Gasleitung eines Beatmungsgeräts oder eines sonstigen Medizingeräts. Die Rohrleitung 26, 28 schließt stromaufwärts und stromabwärts des Strömungsrohrs 10 an den Strömungskanal 24 im Innern des Strömungsrohrs 10 an.

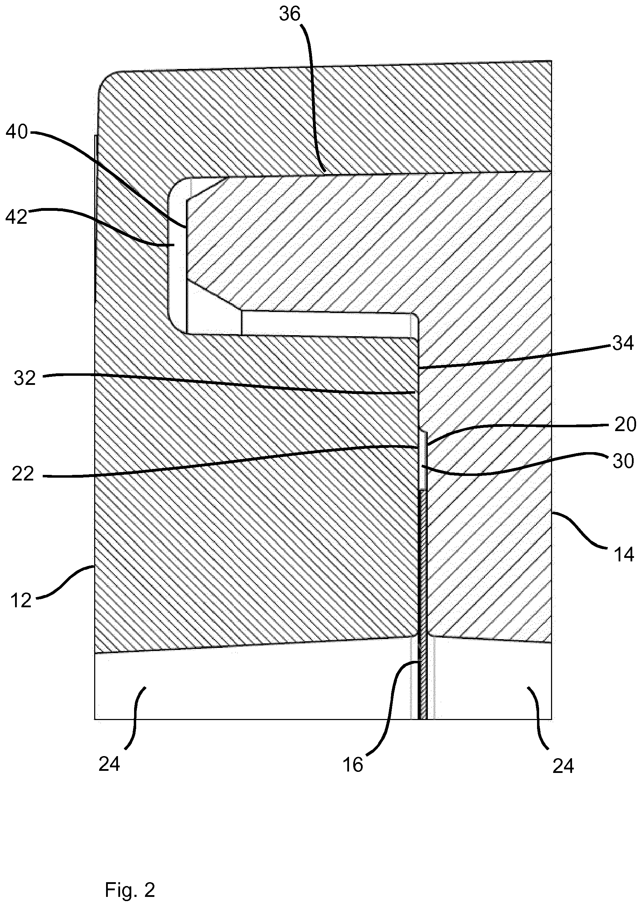

Die Darstellung in Figur 2 zeigt einen Schnitt durch die Flanschbereiche der beiden miteinander kombinierten (zusammengefügten) Gehäusehälften 12, 14 des Strömungsrohrs 10 mit einer Schnittebene quer zur Längsachse des Strömungsrohrs 10. Die als Anschlussflächen 20, 22 fungierenden, einander zugewandten Oberflächen der Flanschbereiche der beiden Gehäusehälften 12, 14 definieren einen Lagerungsspalt 30 für das Blendenelement 16 und schließen das Blendenelement 16 in diesem Lagerungsspalt 30 und mittels dieses Lagerungsspalts 30 ein.

Die Darstellung in Figur 2 zeigt bereits eine Strukturierung der Anschlussflächen 20, 22 gemäß einer speziellen Ausführungsform der hier vorgeschlagenen Neuerung. Allgemein und unabhängig von der gezeigten speziellen Ausführungsform ist bei dem gegenständlichen Strömungsrohr 10 vorgesehen, dass die Anschlussflächen 20, 22 der beiden miteinander kombinierten Gehäusehälften 12, 14 außerhalb des Lagerungsspalts 30 abschnittsweise auf Stoß aneinanderliegen und insoweit jede Anschlussfläche 20, 22 einen Stoßflächenabschnitt 32, 34 umfasst und dass die Gehäusehälften 12, 14 außerhalb des Lagerungsspalts 30 und außerhalb der Stoßflächenabschnitte 32, 34 in zumindest einem Stoffschlussbereich 36 stoffschlüssig miteinander kombiniert sind.

Bei der gezeigten Ausführungsform fungiert eine Kontaktfläche zwischen zumindest einer sich auf der Anschlussfläche 20 der ersten Gehäusehälfte 12 erhebenden Abstellung 40 und zumindest einer zur Aufnahme der Abstellung 40 bestimmten Ausnehmung 42 in der Anschlussfläche 22 der zweiten Gehäusehälfte 14 als Stoffschlussbereich 36. Dabei ist ausdrücklich darauf hinzuweisen, dass dieser besondere Ort des Stoffschlussbereichs 36 zu der gezeigten besonderen Ausführungsform gehört und dass allgemein einerseits der räumliche Abstand des Stoffschlussbereichs 36 von den Stoßflächenabschnitten 32, 34 und andererseits der räumliche Abstand des Stoffschlussbereichs 36 vom Lagerungsspalt 30 im Vordergrund steht.

Anstelle zumindest einer Abstellung 40 und zumindest einer zu deren Aufnahme bestimmten Ausnehmung 42 kommen eine Mehrzahl solcher Abstellungen 40 und Ausnehmungen 42 in Betracht, insbesondere entlang einer Kreislinie angeordnete Abstellungen 40 und Ausnehmungen 42, bevorzugt Abstellungen 40 und Ausnehmungen 42, die entlang einer solchen Kreislinie äquidistant angeordnet sind, also gewissermaßen Zapfen (Abstellungen 40) auf der Anschlussfläche 20 der ersten Gehäusehälfte 12 und Sacklöcher (Ausnehmungen 42) in der Anschlussfläche 22 der zweiten Gehäusehälfte 14.

Bei der gezeigten Ausführungsform ist die Ausnehmung 42 eine in der Anschlussfläche 22 der zweiten Gehäusehälfte 14 umlaufende Ringnut 42. Die Abstellung 40 ist eine auf der Anschlussfläche 20 der ersten Gehäusehälfte 12 umlaufende Ringfeder 40. Die Ringnut 42 ist zur Aufnahme der Ringfeder 40 bestimmt und entsprechende Positionen auf den Anschlussflächen 20, 22 der beiden Gehäusehälften 12, 14 gewährleisten die Einführbarkeit der Ringfeder 40 in die Ringnut 42, wobei zumindest eine Seitenfläche der Ringfeder 40 mit einer Seitenfläche der Ringnut 42 in Kontakt kommt, derart, dass die betreffenden Seitenflächen aneinander liegen. Die beiden aneinanderliegenden Seitenflächen von Ringfeder 40 und Ringnut 42 bilden den Ort des Stoffschlussbereichs 36 und bei der gezeigten Ausführungsform sind die aneinanderliegenden Seitenflächen von Ringfeder 40 und Ringnut 42 in radialer Richtung maximal vom Lagerungsspalt 30 entfernt.

Ausgehend von einer Mittellängsachse der Gehäusehälften 12, 14 (einer Mittellängsachse durch den durch die Gehäusehälften 12, 14 definierten Strömungskanal 24) ist die Abfolge der genannten konstruktiven Einzelheiten des Strömungsrohrs 10 wie folgt: Lagerungsspalt 30 ("innen"), Stoßflächen/-abschnitte 32, 34 ("Mitte"), Abstellung 40/Ausnehmung 42 bzw. Ringfeder 40/Ringnut 42 ("außen"). Zwischen jeder dieser konstruktiven Einzelheiten ist bei der gezeigten Ausführungsform ein Abstand, d.h. die in radialer Richtung aufeinanderfolgenden konstruktiven Einzelheiten grenzen nicht unmittelbar aneinander. Die stoffschlüssige Verbindung der beiden Gehäusehälften 12, 14 erfolgt im Bereich der radial am weitesten außen liegenden vorgenannten konstruktiven Einzelheiten, insbesondere im Bereich der radial am weitesten außen liegenden gemeinsamen Kontaktfläche dieser konstruktiven Einzelheiten, also der radial am weitesten außen liegenden gemeinsamen Kontaktfläche von Abstellung 40 und Ausnehmung 42 oder Ringfeder 40 und Ringnut 42.

Beim Zusammenfügen der beiden Gehäusehälften 12, 14 kommen die Anschlussflächen 20, 22 im Bereich der Stoßflächenabschnitte 32, 34 in Kontakt und liegen dort auf Stoß aneinander. Dies gewährleistet eine definierte Breite des Lagerungsspalts 30. Eine stoffschlüssige Verbindung der beiden Gehäusehälften 12, 14 im einerseits vom Lagerungsspalt 30 und andererseits von den Stoßflächenabschnitten 32, 34 beabstandeten Stoffschlussbereich 36 gewährleistet die definierte Breite des Lagerungsspalts 30 auch während und nach dem Herstellen der stoffschlüssigen Verbindung. Diese definierte Breite des Lagerungsspalts 30 gewährleistet entweder eine definierte Klemmung oder eine definierte lose Lagerung des Blendenelements 16 durch die beiden Gehäusehälften 12, 14 und damit ein definiertes und reproduzierbares Öffnungsverhalten des Blendenelements 16 im Strömungskanal 24 in Abhängigkeit von der Strömungsrichtung im Strömungskanal 24. Das Strömungsrohr 10 ist folglich bidirektional verwendbar und kommt demgemäß für einen bidirektionalen Durchflusssensor in Betracht.

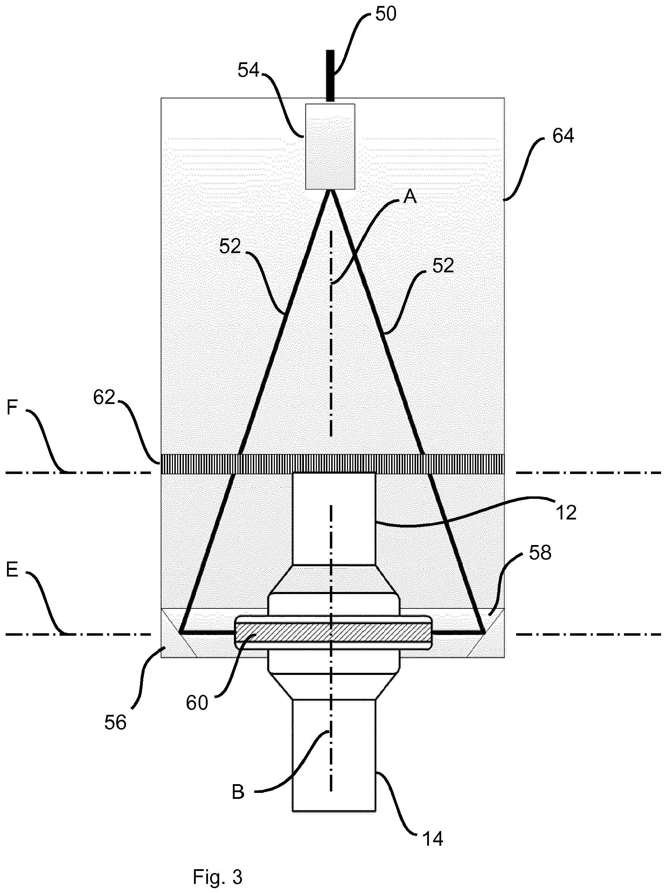

Die Darstellung in Figur 3 zeigt in schematisch vereinfachter Form eine Draufsicht auf eine Anordnung zum Herstellen eines Strömungsrohrs 10 gemäß Figur 2, nämlich eine Anordnung zum stoffschlüssigen Verbinden der beiden Gehäusehälften 12, 14 des Strömungsrohrs 10.

Das stoffschlüssige Verbinden der beiden Gehäusehälften 12, 14 erfolgt mittels der Anordnung gemäß Figur 3 mittels des Fügeverfahrens des Laserschweißens. Entsprechend ist in der Darstellung in Figur 3 ein Laserstrahl 50 und ein Strahlenbüschel 52 des Laserstrahls 50 gezeigt. Das Strahlenbüschel 52 wird aus dem Laserstrahl 50 mittels einer ersten Optik 54, insbesondere mittels eines Prozesskopfes 54 (Axikon zur Ringerzeugung und Fokussierlinse) mit Kollimationslinse, erzeugt, welche den Laserstrahl 50 in einen Kegelmantel aufweitet. Das als Ergebnis der Aufweitung resultierende Strahlenbüschel 52 wird mittels einer zweiten Optik 56, insbesondere mittels eines Ringspiegels 56 für simultanes Ringschweißen, auf die beiden Gehäusehälften 12, 14 umgelenkt.

Bei einem Ringspiegel 56 ist dafür die reflektierende Oberfläche 58 gegen die Ebene des Ringspiegels 56 geneigt, zum Beispiel um 55°. Mittels einer solchen Oberfläche 58 werden die auf den Ringspiegel 56 auftreffenden Strahlen des Strahlenbüschels 52 in Richtung auf das Zentrum des Ringspiegels 56 umgelenkt und treffen bei einem dort angeordneten und lose zusammengefügten Gehäusehälftenpaar 12, 14 auf die beiden Gehäusehälften 12, 14.

Ein Ringspiegel 56 als zweite Optik 56 ist innerhalb der Anordnung so orientiert, dass eine durch den Ringspiegel 56 definierte Ebene E senkrecht zu dem (nicht aufgeweiteten) Laserstrahl 50 oder senkrecht zu einer Mittellängsachse A des kegelmantelförmigen Strahlenbüschels 52 steht. Die beiden anfänglich lose zusammengefügten Gehäusehälften 12, 14 befinden sich im Zentrum des Ringspiegels 56 in einer Ausrichtung, bei der eine Längsachse B der Gehäusehälften 12, 14 (eine Mittellängsachse durch den Strömungskanal 24) mit der Mittellängsachse A des kegelmantelförmigen Strahlenbüschels 52 zusammenfällt. Die einzelnen Strahlen des Strahlenbüschels 52 treffen in Abhängigkeit vom Abstand zwischen dem Prozesskopf 54 und dem Ringspiegel 56 unter einem Winkel von unter 90° bis asymptotisch nahe 90° auf die Ebene E des Ringspiegels 56 auf. Die reflektierende Oberfläche 58 des Ringspiegels 56 ist gegen die Ebene des Ringspiegels 56 geneigt, zum Beispiel um einen Winkel von 55° oder einen Winkel im Bereich von 55°. Wenn im Interesse einfacher Verhältnisse davon ausgegangen wird, dass die Strahlen des Strahlenbüschels 52 unter einem rechten Winkel auf die Ebene des Ringspiegels 56 auftreffen, erfolgt bei einer gegen die Ebene des Ringspiegels 56 um einen Winkel von 45° geneigten reflektierenden Oberfläche 58 des Ringspiegels 56 eine Umlenkung der Strahlen des Strahlenbüschels 52 genau in die Ebene des Ringspiegels 56 und in Richtung auf das Zentrum des Ringspiegels 56. Bei unter einem Winkel von weniger als 90° auf die Ebene des Ringspiegels 56 auftreffenden Strahlen des Strahlenbüschels 52 und einer gegen die Ebene des Ringspiegels 56 um einen Winkel von 45° geneigten reflektierenden Oberfläche 58 werden die auf den Ringspiegel 56 einfallenden Strahlen nicht genau in die Ebene des Ringspiegels 56 umgelenkt. Eine Umlenkung genau in die Ebene des Ringspiegels 56 kann durch eine entsprechende Anpassung der Neigung der reflektierenden Oberfläche 58 des Ringspiegels 56 erreicht werden, zum Beispiel eine Neigung von 55°. Dies ist optional möglich, aber nicht zwingend erforderlich. Wichtig ist, dass die beiden Gehäusehälften 12, 14 so im Zentrum des Ringspiegels 56 platziert werden, dass der Stoffschlussbereich 36 im Strahlengang des durch die Oberfläche 58 des Ringspiegels 56 umgelenkten Strahlenbüschels 52 liegt, wie dies in der Darstellung in Figur 3 gezeigt ist. Die einzelnen Strahlen des Strahlenbüschels 52 treffen dann entlang von deren Umfangslinie auf eine der Gehäusehälften 12, 14. Der Stoffschlussbereich 36 liegt im Innern der anfänglich lose zusammengefügten Gehäusehälften 12, 14. Die (in Richtung auf den Ringspiegel 56) außen liegende Gehäusehälfte 14 mit der Ausnehmung 42, insbesondere einer Ausnehmung 42 in Form einer Ringnut 42, schattet den Stoffschlussbereich 36 gegen den Strahlengang ab. Damit die Laserstrahlen den Stoffschlussbereich 36 (Fig. 2) erreichen können, ist die abschattende Gehäusehälfte 12, aus einem transparenten Werkstoff, insbesondere einem lasertransparenten Kunststoff gefertigt und also lasertransparent ausgeführt oder ist zumindest im Bereich des Strahlengangs lasertransparent ausgeführt. Die andere Gehäusehälfte 14 absorbiert die Energie des Laserstrahls 50 und ist aus einem entsprechenden Werkstoff, insbesondere einem entsprechenden Kunststoff, gefertigt. Welche der beiden Gehäusehälften 12, 14 die außen liegende, abschattende Gehäusehälfte 12, 14 ist und folglich ganz oder teilweise lasertransparent ausgeführt ist, hängt von der Ausführung der Gehäusehälften 12, 14 des Strömungsrohrs 10 ab. Aufgrund der Absorption der Laserenergie durch die nicht oder zumindest im Stoffschlussbereich 36 nicht lasertransparente Gehäusehälfte 14 entsteht im Stoffschlussbereich 36 eine umlaufende Schweißnaht. Dabei wird die nicht oder zumindest im Stoffschlussbereich 36 nicht lasertransparente Gehäusehälfte 14 im Stoffschlussbereich 36 durch die Energie des Laserstrahls 50 plastifiziert. Durch Wärmeleitung wird im Stoffschlussbereich 36 auch das Material der anderen Gehäusehälfte 12 plastifiziert. Im Stoffschlussbereich 36 entsteht so eine stoff- und formschlüssige sowie gasdichte Verbindung zwischen den Gehäusehälften 12, 14.

Gemäß Figur 3 gehört bei einer bevorzugten Ausführungsform der Anordnung eine lasertransparente, planparallele Platte 62, insbesondere eine planparallele Glasplatte, zu der zum Herstellen des Strömungsrohrs 10, nämlich zum stoffschlüssigen Verbinden der beiden Gehäusehälften 12,14, bestimmten Anordnung. Eine solche lasertransparente Platte 62 fixiert die beiden Gehäusehälften 12,14 relativ zueinander und hält die beiden zum stoffschlüssigen Verbinden zunächst lose zusammengefügten Gehäusehälften 12,14 während des stoffschlüssigen Verbindens. Dafür ist die im Strahlengang abgewandte Gehäusehälfte 14 (die entlang des Strahlengangs von der Quelle des Laserstrahls 50 am weitesten entfernte Gehäusehälfte 14) fixiert, zum Beispiel eingespannt oder auf einen am freien Ende der Gehäusehälfte 14 in das Innere der Gehäusehälfte 14 hineinragenden Zapfen aufgesetzt oder in eine das freie Ende der Gehäusehälfte 14 umgreifende Muffe eingesetzt. Jedenfalls ist diese im Folgenden kurz als im Strahlengang abgewandte Gehäusehälfte 14 bezeichnete Gehäusehälfte 14 in Bezug auf den Ringspiegel 56 in axialer und radialer Richtung fixiert, wobei die Fixierung in radialer Richtung bedeutet, dass eine Mittellängsachse B dieser Gehäusehälfte 14 mit einer Mittellängsachse A des auf den Ringspiegel 56 auftreffenden Strahlenbüschels 52 zusammenfällt (die Gehäusehälfte 14 befindet sich in radialer Richtung im Zentrum des Ringspiegels 56). Auf eine solchermaßen fixierte, im Strahlengang abgewandte Gehäusehälfte 14 kann die andere, im Folgenden als die dem Strahlengang zugewandte Gehäusehälfte 12 bezeichnete Gehäusehälfte 12 zunächst lose aufgesetzt werden. Dabei kommen die Abstellung 40 und die Ausnehmung 42, insbesondere die Ringfeder 40 und die Ringnut 42, miteinander in Eingriff. Zur Fixierung dieser dem Strahlengang zugewandten Gehäusehälfte 12 ist die lasertransparente Platte 62 vorgesehen. Diese liegt an der dem Strahlengang zugewandten Gehäusehälfte 12 an deren freiem Ende an. Die Mittellängsachsen B der beiden Gehäusehälften 12, 14 sind kollinear und kollinear mit der Mittellängsachse A des Strahlenbüschels 52 (somit auch kollinear mit dem Laserstrahl 50). Die Mittellängsachsen A, B stehen senkrecht auf einer Ebene E des Ringspiegels 56. Die Randlinie des freien Endes der dem Strahlengang zugewandten Gehäusehälfte 12 liegt in einer Ebene parallel zur Ebene E des Ringspiegels 56. Eine Ebene F der auf oder an der Randlinie des freien Endes der dem Strahlengang zugewandten Gehäusehälfte 12 aufliegenden oder anliegenden lasertransparenten Platte 62 ist damit ebenfalls parallel zur Ebene E des Ringspiegels 56 und eine Mittellängsachse A des Strahlenbüschels 52 steht auch senkrecht auf der Ebene F der lasertransparenten Platte 62. Alle Strahlen des Strahlenbüschels 52 erfahren durch die lasertransparente Platte 62 aufgrund des homogenen Materials und aufgrund der Anordnung im Strahlenbüschel 52 dieselbe Brechung. Die lasertransparente Platte 62 fungiert damit als ein vorteilhaftes Mittel zur Fixierung der zunächst lose mit der anderen Gehäusehälfte 14 (der im Strahlengang abgewandten Gehäusehälfte 14) kombinierten Gehäusehälfte 12 (der dem Strahlengang zugewandten Gehäusehälfte 12).

Die lasertransparente Platte 62 ist zum Zwecke einer solchen Fixierung optional in einem Gehäuse 64 der Anordnung quer zu ihrer Ebene F verschiebbar beweglich. Zum Verschweißen zweier Gehäusehälften 12, 14 werden die Gehäusehälften 12, 14 in der oben beschriebenen Art und Weise im Bereich des Ringspiegels 56 platziert. Optional wird dabei zumindest die im Strahlengang abgewandte Gehäusehälfte 14 ebenfalls mittels des Gehäuses 64 gehalten oder diese Gehäusehälfte 14 wird mittels einer (nicht gezeigten) Fixiereinrichtung gehalten, wobei das Gehäuse 64 relativ zu der Fixiereinrichtung fixiert ist. Bevor die Gehäusehälften 12, 14 im Bereich des Ringspiegels 56 platziert werden, wird die lasertransparente Platte 62 so verschoben, dass die Platzierung der Gehäusehälften 12, 14 möglich ist. Anschließend wird die lasertransparente Platte 62 in umgekehrter Richtung so verschoben, bis die dem Strahlengang zugewandte Gehäusehälfte 12 mittels der lasertransparenten Platte 62 fixiert ist. Zum Bewegen der lasertransparenten Platte 62 ist eine von dem Gehäuse 64 umfasste Führung vorgesehen, welche die beschriebenen translatorischen Bewegungsvorgänge erlaubt.

Einzelne im Vordergrund stehende Aspekte der hier eingereichten Beschreibung lassen sich abschließend kurz wie folgt zusammenfassen: Angegeben werden ein Strömungsrohr 10 und ein Verfahren zum Herstellen eines gegenständlichen Strömungsrohrs 10. Das Strömungsrohr 10 umfasst ein zumindest zweiteiliges Gehäuse mit einer ersten und einer zweiten Gehäusehälfte 12, 14, wobei jede Gehäusehälfte 12, 14 eine zur Kombination mit der jeweils anderen Gehäusehälfte 12, 14 bestimmte Anschlussfläche 20, 22 aufweist. Die Anschlussflächen 20, 22 der beiden miteinander kombinierten Gehäusehälften 12, 14 schließen einen Lagerungsspalt 30 für ein Blendenelement 16 ein. Das Blendenelement 16 fungiert als Strömungskörper in einem durch das Gehäuse 12, 14 definierten Strömungskanal 24. Die Anschlussflächen 20, 22 der beiden miteinander kombinierten Gehäusehälften 12, 14 liegen außerhalb des Lagerungsspalts 30 (räumlich entfernt von dem Lagerungsspalt 30) abschnittsweise auf Stoß aneinander. Insoweit umfasst jede Anschlussfläche 20, 22 einen vom Lagerungsspalt 30 beabstandeten Stoßflächenabschnitt 32, 34. Außerhalb des Lagerungsspalts 30 (räumlich entfernt vom Lagerungsspalt 30) und außerhalb der Stoßflächenabschnitte 32, 34 (räumlich entfernt von den Stoßflächenabschnitten 32, 34) sind die beiden Gehäusehälften 12, 14 stoffschlüssig miteinander kombiniert, nämlich durch Laserschweißen.

### BEZUGSZEICHENLISTE

- 10: Strömungsrohr
- 12: (erste) Gehäusehälfte
- 14: (zweite) Gehäusehälfte
- 16: Blendenelement
- 18: (frei)
- 20: Anschlussfläche
- 22: Anschlussfläche
- 24: Strömungskanal
- 26: Rohrleitung
- 28: Rohrleitung
- 30: Lagerungsspalt (für Blendenelement)
- 32: Stoßflächenabschnitt
- 34: Stoßflächenabschnitt
- 36: Stoffschlussbereich
- 38: (frei)
- 40: Abstellung, Ringfeder
- 42: Ausnehmung, Ringnut
- 44-48: (frei)
- 50: Laserstrahl
- 52: Strahlenbüschel
- 54: erste Optik, Prozesskopf
- 56: zweite Optik, Ringspiegel
- 58: (geneigte) Oberfläche (des Ringspiegels)
- 60: Schweißnaht
- 62: lasertransparente Platte
- 64: Gehäuse

## Patentansprüche

1. Strömungsrohr (10) mit einem zumindest eine erste Gehäusehälfte (12) und eine zweite Gehäusehälfte (14) umfassenden Gehäuse (12, 14),
wobei jede Gehäusehälfte (12, 14) eine zur Kombination mit der jeweils anderen Gehäusehälfte (12, 14) bestimmte Anschlussfläche (20, 22) aufweist, wobei die Anschlussflächen (20, 22) der beiden miteinander kombinierten Gehäusehälften (12, 14) einen Lagerungsspalt (30) für ein als Strömungskörper in einem durch das Gehäuse (12, 14) definierten Strömungskanal (24) fungierendes Blendenelement (16) einschließen,
**dadurch gekennzeichnet, dass** die Anschlussflächen (20, 22) der beiden miteinander kombinierten Gehäusehälften (12, 14) außerhalb des Lagerungsspalts (30) abschnittsweise auf Stoß aneinanderliegen und insoweit jede Anschlussfläche (20, 22) einen Stoßflächenabschnitt (32, 34) umfasst,
dass die Gehäusehälften (12, 14) außerhalb des Lagerungsspalts (30) und außerhalb der Stoßflächenabschnitte (32, 34) in einem Stoffschlussbereich (36) stoffschlüssig miteinander kombiniert sind,
dass mindestens eine der beiden Gehäusehälften (12, 14) lasertransparent oder zumindest im Bereich des Stoffschlussbereichs (36) lasertransparent ist und
dass die beiden Gehäusehälften (12, 14) im Bereich des Stoffschlussbereichs (36) durch Laserschweißen stoffschlüssig miteinander kombiniert sind.

2. Strömungsrohr (10) nach Anspruch 1,
wobei eine der Gehäusehälften (12) in ihrer Anschlussfläche (20) zumindest eine Abstellung (40) und die andere Gehäusehälfte (14) in ihrer Anschlussfläche (22) zumindest eine zur Aufnahme der Abstellung (40) bestimmte Ausnehmung (42) aufweist und
wobei die Gehäusehälften (12, 14) mittels der Abstellung (40) und der Ausnehmung (42) stoffschlüssig miteinander kombiniert sind, indem beim Zusammenfügen der Gehäusehälften (12, 14) miteinander in Kontakt kommende Oberflächen oder Oberflächenabschnitte der Abstellung (40) und der Ausnehmung (42) den Stoffschlussbereich (36) bilden.

3. Strömungsrohr (10) nach Anspruch 2,
wobei der Lagerungsspalt (30), die Stoßflächenabschnitte (32, 34) sowie die Abstellung (40) und die Ausnehmung (42) auf den Anschlussflächen (20, 22) in radialer Richtung so angeordnet sind, dass der Lagerungsspalt (30) relativ zu den Stoßflächenabschnitten (32, 34) vor den Stoßflächenabschnitten (32, 34) liegt sowie die Abstellung (40) und die Ausnehmung (42) relativ zu den Stoßflächenabschnitten (32, 34) hinter den Stoßflächenabschnitten (32, 34) liegen.

4. Strömungsrohr (10) nach Anspruch 2 oder 3,
wobei die Abstellung (40) und die Ausnehmung (42) im Bereich einer radial am weitesten außen liegenden gemeinsamen Kontaktfläche stoffschlüssig miteinander verbunden sind.

5. Strömungsrohr (10) nach Anspruch 2, 3 oder 4,
mit einer radial umlaufenden Abstellung (40) und einer radial umlaufenden Ausnehmung (42).

6. Strömungsrohr (10) nach einem der vorangehenden Ansprüche,
wobei die beiden Gehäusehälften (12, 14) mittels eines auf einen Kegelmantel aufgeweiteten und gleichzeitig entlang der kompletten Umfangslinie wirksamen Laserstrahls (50) stoffschlüssig verbunden sind.

7. Durchflusssensor mit einem Strömungsrohr (10) nach einem der Ansprüche 1 bis 6.

8. Verfahren zur Herstellung eines Strömungsrohrs (10) nach einem der Ansprüche 1 bis 6,
wobei das Verfahren die folgenden Schritte umfasst:
Zusammenfügen der beiden Gehäusehälften (12, 14) derart, dass einerseits das Blendenelement (16) in dem Lagerungsspalt (30) von den beiden Gehäusehälften (12, 14) eingeschlossen ist und
andererseits die beiden Gehäusehälften (12, 14) außerhalb des Lagerungsspalts (30) im Bereich der Stoßflächenabschnitt (32, 34) auf Stoß aneinanderliegen;
stoffschlüssiges Kombinieren der Gehäusehälften (12, 14) außerhalb des Lagerungsspalts (30) und außerhalb der Stoßflächenabschnitte (32, 34) durch Laserschweißen.

9. Verfahren nach Anspruch 8 zum Herstellung eines Strömungsrohrs (10) nach einem der Ansprüche 2 bis 6,
wobei der Verfahrensschritt des Zusammenfügens der beiden Gehäusehälften (12, 14) den Teilschritt des Einführens der Abstellung (40) in die Ausnehmung (42) umfasst und entsprechend das Zusammenfügen der beiden Gehäusehälften (12, 14) derart erfolgt, dass
das Blendenelement (16) in dem Lagerungsspalt (30) von den beiden Gehäusehälften (12, 14) eingeschlossen ist,
die beiden Gehäusehälften (12, 14) außerhalb des Lagerungsspalts (30) im Bereich der Stoßflächenabschnitte (32, 34) auf Stoß aneinanderliegen und die Abstellung (40) in die Ausnehmung (42) eingreift.

10. Verfahren nach Anspruch 9,
wobei die beiden Gehäusehälften (12, 14) stoffschlüssig miteinander verbunden werden, indem die in die Ausnehmung (42) eingreifende Abstellung (40) durch Laserschweißen mit der Ausnehmung (42) verbunden wird.

11. Verfahren nach Anspruch 10 zum Herstellen eines Strömungsrohrs (10) nach Anspruch 5,
wobei zum Laserschweißen ein Laserstrahl (50) mittels einer ersten Optik (54) in einen Kegelmantel aufgeweitet und mittels einer zweiten Optik (56) in Richtung auf einen von den beiden lose zusammengefügten Gehäusehälften (12, 14) eingeschlossenen Stoffschlussbereich (36) umgelenkt wird und wobei die radial umlaufende Abstellung (40) mittels des Laserstrahls (50) durch Laserschweißen gleichzeitig entlang der kompletten Umfangslinie mit der radial umlaufenden Ausnehmung (42) stoffschlüssig verbunden wird.

12. Verfahren nach Anspruch 11,
wobei die zusammengefügten Gehäusehälften (12, 14) in axialer Richtung kollinear mit einer Mittellängsachse eines aufgrund der Aufweitung des Laserstrahls (50) resultierenden Strahlenbüschels (52) ausgerichtet fixiert werden, wobei die im Strahlengang von der Quelle des Laserstrahls (50) abgewandte Gehäusehälfte (12, 14) in axialer Richtung fixiert wird und die im Strahlengang der Quelle des Laserstrahls (50) zugewandte Gehäusehälfte (12, 14) mittels einer lasertransparenten Platte (62) auf der anderen Gehäusehälfte (12, 14) fixiert wird, wobei eine Ebene der lasertransparenten Platte (62) senkrecht auf einer durch die Quelle des Laserstrahls (50) laufenden Mittellängsachse der beiden Gehäusehälften (12, 14) steht.

13. Verfahren nach einem der Ansprüche 8 bis 12, wobei der Laserstrahl (50) beim Laserschweißen die lasertransparente Gehäusehälfte (12, 14) durchdringt und die andere Gehäusehälfte (12, 14) die Energie des Laserstrahls (50) absorbiert.

14. Medizingerät mit zumindest einem Strömungsrohr (10) nach einem der Ansprüche 1 bis 6 oder einem Durchflusssensor nach Anspruch 7.

## Claims

1. Flow tube (10) having a housing (12, 14) which comprises at least a first housing half (12) and a second housing half (14), wherein each housing half (12, 14) has a connection surface (20, 22) intended for combination with the in each case other housing half (12, 14), wherein the connection surfaces (20, 22) of the two housing halves (12, 14) combined with one another enclose a mounting gap (30) for an orifice element (16), which orifice element acts as a flow body in a flow channel (24) defined by the housing (12, 14),
**characterized in that**
the connection surfaces (20, 22) of the two housing halves (12, 14) combined with one another sectionally abut against one another outside the mounting gap (30), and, in this respect, each connection surface (20, 22) comprises an abutment surface section (32, 34),
**in that** the housing halves (12, 14) are combined with one another in a materially bonded manner in a material-bonding region (36) outside the mounting gap (30) and outside the abutment surface sections (32, 34),
**in that** at least one of the two housing halves (12, 14) is laser-transparent or is laser-transparent at least in the region of the material-bonding region (36),
and
**in that**, in the region of the material-bonding region (36), the two housing halves (12, 14) are combined with one another in a materially bonded manner by way of laser welding.

2. Flow tube (10) according to Claim 1,
wherein one of the housing halves (12) has in its connection surface (20) at least one offset (40), and the other housing half (14) has in its connection surface (22) at least one recess (42) intended for receiving the offset (40), and
wherein the housing halves (12, 14) are combined with one another in a materially bonded manner by means of the offset (40) and the recess (42) in that, when the housing halves (12, 14) are joined together, surfaces or surface sections of the offset (40) and of the recess (42) that come into contact with one another form the material-bonding region (36).

3. Flow tube (10) according to Claim 2,
wherein the mounting gap (30), the abutment surface sections (32, 34) and also the offset (40) and the recess (42) are arranged at the connection surfaces (20, 22) in the radial direction in such a way that the mounting gap (30), relative to the abutment surface sections (32, 34), is situated in front of the abutment surface sections (32, 34) and also the offset (40) and the recess (42), relative to the abutment surface sections (32, 34), are situated behind the abutment surface sections (32, 34).

4. Flow tube (10) according to Claim 2 or 3,
wherein the offset (40) and the recess (42) are connected to one another in a materially bonded manner in the region of a common contact surface, which common contact surface is situated furthest outwards radially.

5. Flow tube (10) according to Claim 2, 3 or 4,
having a radially encircling offset (40) and a radially encircling recess (42).

6. Flow tube (10) according to one of the preceding claims,
wherein the two housing halves (12, 14) are connected in a materially bonded manner by means of a laser beam (50) widened into a cone envelope and simultaneously active along the complete peripheral line.

7. Flow sensor having a flow tube (10) according to one of Claims 1 to 6.

8. Method for producing a flow tube (10) according to one of Claims 1 to 6,
wherein the method comprises the following steps:
joining the two housing halves (12, 14) together in such a way that the orifice element (16) is enclosed in the mounting gap (30) by the two housing halves (12, 14), on the one hand, and the two housing halves (12, 14) abut against one another outside the mounting gap (30) in the region of the abutment surface section (32, 34), on the other hand;
combining the housing halves (12, 14) in a materially bonded manner outside the mounting gap (30) and outside the abutment surface sections (32, 34) by way of laser welding.

9. Method according to Claim 8 for producing a flow tube (10) according to one of Claims 2 to 6,
wherein the method step of joining the two housing halves (12, 14) together comprises the sub-step of introducing the offset (40) into the recess (42), and accordingly the joining-together of the two housing halves (12, 14) is realized in such a way that
the orifice element (16) is enclosed in the mounting gap (30) by the two housing halves (12, 14),
the two housing halves (12, 14) abut against one another outside the mounting gap (30) in the region of the abutment surface sections (32, 34) and the offset (40) engages into the recess (42).

10. Method according to Claim 9,
wherein the two housing halves (12, 14) are connected to one another in a materially bonded manner in that the offset (40) engaging into the recess (42) is connected to the recess (42) by way of laser welding.

11. Method according to Claim 10 for producing a flow tube (10) according to Claim 5,
wherein, for laser welding, a laser beam (50) is widened into a cone envelope by means of a first optical unit (54) and is diverted into the direction of a material-bonding region (36), which is enclosed by the two loosely joined-together housing halves (12, 14), by means of a second optical unit (56) and
wherein the radially encircling offset (40) is simultaneously connected in a materially bonded manner to the radially encircling recess (42) along the complete peripheral line by way of laser welding by means of the laser beam (50).

12. Method according to Claim 11,
wherein the joined-together housing halves (12, 14) are fixed in the axial direction in a manner oriented collinearly with respect to a central longitudinal axis of a beam bundle (52) which results from the widening of the laser beam (50), wherein the housing half (12, 14) which faces away from the source of the laser beam (50) along the beam path is fixed in the axial direction, and the housing half (12, 14) which faces towards the source of the laser beam (50) along the beam path is fixed by means of a laser-transparent plate (62) on the other housing half (12, 14), wherein a plane of the laser-transparent plate (62) is perpendicular to a central longitudinal axis of the two housing halves (12, 14), which central longitudinal axis passes through the source of the laser beam (50).

13. Method according to one of Claims 8 to 12, wherein, during the laser welding, the laser beam (50) passes through the laser-transparent housing half (12, 14) and the other housing half (12, 14) absorbs the energy of the laser beam (50).

14. Medical device having at least one flow tube (10) according to one of Claims 1 to 6 or having a flow sensor according to Claim 7.

## Revendications

1. Tube d'écoulement (10) comprenant un boîtier (12, 14) comprenant au moins une première moitié de boîtier (12) et une deuxième moitié de boîtier (14), chaque moitié de boîtier (12, 14) comportant une surface de raccordement (20, 22) destinée à être combinée avec l'autre moitié de boîtier (12, 14), les surfaces de raccordement (20, 22) des deux moitiés de boîtier (12, 14) combinées l'une à l'autre enfermant une fente de scellement (30) destinée à un élément obturateur (16) fonctionnant comme un corps d'écoulement dans un canal d'écoulement (24) défini par le boîtier (12, 14), **caractérisé en ce que**
les surfaces de raccordement (20, 22) des deux moitiés de boîtier (12, 14) combinées l'une à l'autre sont aboutées par endroits à l'extérieur de la fente de scellement (30) et pour cela chaque surface de raccordement (20, 22) comprend une portion de surface d'aboutement (32, 34),
les moitiés de boîtier (12, 14) sont combinées entre elles par une liaison de matière dans une zone de liaison de matière (36) à l'extérieur de la fente de scellement (30) et à l'extérieur des portions de surface d'aboutement (32, 34),
au moins une des deux moitiés de boîtier (12, 14) est transparente au laser ou au moins transparente au laser au niveau de la zone de liaison de matière (36) et
les deux moitiés de boîtier (12, 14) sont combinées l'une à l'autre par une liaison de matière au niveau de la zone de liaison de matière (36) par soudage laser.

2. Tube d'écoulement (10) selon la revendication 1,
l'une des moitiés de boîtier (12) comportant dans sa surface de raccordement (20) au moins un moyen de placement (40) et l'autre moitié de boîtier (14) comportant dans sa surface de raccordement (22) au moins un évidement (42) destiné à recevoir le moyen de placement (40) et
les moitiés de boîtier (12, 14) étant combinées l'une à l'autre par une liaison matière à l'aide du moyen de placement (40) et de l'évidement (42) du fait que des surfaces ou des portions de surface du moyen de placement (40) et de l'évidement (42), lesquelles viennent en contact les unes avec les autres lorsque les moitiés de boîtier (12, 14) sont assemblées, forment la zone de liaison de matière (36).

3. Tube d'écoulement (10) selon la revendication 2,
la fente de scellement (30), les portions de surface d'aboutement (32, 34) ainsi que le moyen de placement (40) et l'évidement (42) étant disposés sur les surfaces de raccordement (20, 22) dans la direction radiale de sorte que la fente de scellement (30) est située par rapport aux portions de surface d'aboutement (32, 34) devant les portions de surface d'aboutement (32, 34) et le moyen de placement (40) et l'évidement (42) sont situés derrière les portions de surface d'aboutement (32 , 34) par rapport aux portions de surface d'aboutement (32, 34).

4. Tube d'écoulement (10) selon la revendication 2 ou 3,
le moyen de placement (40) et l'évidement (42) étant reliés l'un à l'autre par une liaison de matière dans la région d'une surface de contact commune située radialement la plus à l'extérieur.

5. Tube d'écoulement (10) selon la revendication 2, 3 ou 4, comprenant un moyen de placement (40) radialement circonférentiel et un évidement (42) radialement circonférentiel.

6. Tube d'écoulement (10) selon l'une des revendications précédentes, les deux moitiés de boîtier (12, 14) étant reliées par une liaison de matière au moyen d'un faisceau laser (50) qui s'élargit en une coque conique et qui agit simultanément le long de la ligne circonférentielle complète.

7. Capteur de débit comprenant un tube d'écoulement (10) selon l'une des revendications 1 à 6.

8. Procédé de réalisation d'un tube d'écoulement (10) selon l'une des revendications 1 à 6,
le procédé comprenant les étapes suivantes :
assembler les deux moitiés de boîtier (12, 14) de telle sorte que d'une part l'élément obturateur (16) soit enfermé dans la fente de scellement (30) par les deux moitiés de boîtier (12, 14) et que d'autre part les deux moitiés de boîtier (12, 14) soient aboutées à l'extérieur de la fente de scellement (30) au niveau des portions de surface d'aboutement (32, 34) ;
combiner par une liaison de matière les moitiés de boîtier (12, 14) à l'extérieur de la fente de scellement (30) et à l'extérieur des portions de surface d'aboutement (32, 34) par soudage au laser.

9. Procédé selon la revendication 8 destiné à réaliser un tube d'écoulement (10) selon l'une des revendications 2 à 6,
l'étape d'assemblage des deux moitiés de boîtier (12, 14) comprenant la sous-étape d'introduction du moyen de placement (40) dans l'évidement (42) et l'assemblage des deux moitiés de boîtier (12, 14) étant effectuée de manière appropriée de manière à ce que
l'élément obturateur (16) soit enfermé dans la fente de scellement (30) des deux moitiés de boîtier (12, 14),
les deux moitiés de boîtier (12, 14) se trouvent l'une contre l'autre à l'extérieur de la fente de scellement (30) dans la zone des portions de surface d'aboutement (32, 34) et
le moyen de placement (40) s'engage dans l'évidement (42).

10. Procédé selon la revendication 9,
les deux moitiés de boîtier (12, 14) étant reliées l'une à l'autre par une liaison de matière du fait que le moyen de placement (40) s'engageant dans l'évidement (42) est relié à l'évidement (42) par soudage laser.

11. Procédé selon la revendication 10 destiné à réaliser un tube d'écoulement (10) selon la revendication 5,
pour effectuer le soudage au laser, un faisceau laser (50) étant élargi en une enveloppe conique au moyen d'une première optique (54) et étant dévié au moyen d'une deuxième optique (56) en direction d'une zone de liaison de matière (36) enfermée par les deux moitiés de boîtier (12, 14) assemblées de manière lâche et
le moyen de placement (40) radialement circonférentiel étant relié simultanément par une liaison de matière à l'évidement (42) radialement circonférentiel au moyen du faisceau laser (50) par soudage laser le long de la ligne circonférentielle complète.

12. Procédé selon la revendication 11,
les moitiés de boîtier (12, 14) assemblées étant fixées en étant orientées dans la direction axiale de manière colinéaire à un axe longitudinal central d'un groupe de faisceaux (52) résultant de l'élargissement du faisceau laser (50), la moitié de boîtier (12, 14) opposée à la source du faisceau laser (50) dans le trajet du faisceau étant fixée dans la direction axiale et la moitié de boîtier (12, 14) dirigée vers la source du faisceau laser (50) dans le trajet du faisceau étant fixée à l'autre moitié de boîtier (12, 14) au moyen d'une plaque (62) transparente au laser, un plan de la plaque (62) transparente au laser étant perpendiculaire à un axe longitudinal central des deux moitiés de boîtier (12, 14) qui passe par la source du faisceau laser (50).

13. Procédé selon l'une des revendications 8 à 12, le faisceau laser (50) pénétrant dans la moitié de boîtier (12, 14) transparent au laser pendant le soudage laser et l'autre moitié de boîtier (12, 14) absorbant l'énergie du faisceau laser (50).

14. Dispositif médical comprenant au moins un tube d'écoulement (10) selon l'une des revendications 1 à 6 ou un capteur de débit selon la revendication 7.
